**Europäisches Patentamt**

**European Patent Office**

**Office européen des brevets**

(19)

(11) Veröffentlichungsnummer : **0 417 414 B1**

(12) **EUROPÄISCHE PATENTSCHRIFT**

(45) Veröffentlichungstag der Patentschrift :
15.09.93 Patentblatt 93/37

(51) Int. Cl.⁵ : **G01M 1/36,** B24B 41/00

(21) Anmeldenummer : **90112488.3**

(22) Anmeldetag : **29.06.90**

(54) **Verfahren und Vorrichtungen zum Unwuchtausgleich an einer Schleifscheibe.**

(30) Priorität : **11.09.89 DE 3930299**

(43) Veröffentlichungstag der Anmeldung :
**20.03.91 Patentblatt 91/12**

(45) Bekanntmachung des Hinweises auf die
Patenterteilung :
**15.09.93 Patentblatt 93/37**

(84) Benannte Vertragsstaaten :
**ES FR GB IT**

(56) Entgegenhaltungen :
**DE-A- 2 830 070**
**DE-A- 3 003 127**
**DE-A- 3 614 379**
**DE-A- 3 726 024**
**US-A- 4 345 472**
**US-A- 4 357 832**
**PATENT ABSTRACTS OF JAPAN Band 14, Nr.**
**349 (P-1084)(4292), 27. Juli 1990; & JP - A -**
**2126128 (OOMIYA KOGYO K.K.) 15.05.1990**

(73) Patentinhaber : **Gebrüder Hofmann GmbH &
Co. KG Maschinenfabrik
Werner-von-Siemens-Strasse 2
D-64319 Pfungstadt (DE)**

(72) Erfinder : **Rossmann, Günther, Dipl.-Ing.
Am Teufelsbach 4
D-6147 Lautertal 3 (DE)**
Erfinder : **Varona, Jesus, Dipl.-Ing.
Graupnerweg 12
D-6100 Darmstadt (DE)**
Erfinder : **Hofmann, Andreas, Dipl.-Ing.
Kiesstrasse 76
D-6100 Darmstadt (DE)**

(74) Vertreter : **Nöth, Heinz, Dipl.-Phys. et al
Patentanwälte Pfenning, Meinig & Partner
Mozartstrasse 17
D-80336 München (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und Vorrichtungen zum Unwuchtausgleich an einer Schleifscheibe, bei denen nach einem Unwuchtmeßvorgang zum Ausgleich der gemessenen Schleifscheibenunwucht zwei oder drei Ausgleichsgewichte an der Schleifscheibe auf einem oder mehreren Radien um die Schleifscheibenachse in aus der auszugleichenden Unwucht errechneten Ausgleichspositionen befestigt werden.

Bei Schleifscheiben entstehen Unwuchten hauptsächlich durch Geometrieunterschiede, exzentrischen Schleifscheibensitz, durch das Abrichten der Scheibe und unterschiedliche Kühlwasseraufnahme infolge inhomogenen Gefüges der Schleifscheibe. Diese Unwuchten verursachen bei der Rotation der Schleifscheibe Massenbeschleunigungskräfte, die auf die Schleifmaschinenkonstruktion einwirken. Dadurch entstehen unwuchterzwungene Relativbewegungen zwischen Werkstück und Schleifscheibe, die zu Oberflächenwelligkeiten der Schleifflächen an den zu bearbeitenden Werkstücken führen. Ausgewuchtete Schleifscheiben sind daher zur Gewinnung genauer Oberflächenprofile der zu bearbeitenden Werkstücke erforderlich.

Zum Auswuchten von Schleifscheiben ist es bekannt (z. B. Hofmann Informationen 12, Sonderheft: Auswuchten von Schleifscheiben), in einer um die Schleifscheibendrehachse vorhandenen Führungsnut zwei oder drei Ausgleichsgewichte in Form von Ausgleichssteinen in Abhängigkeit von vorhandenen Schleifscheibenunwuchten anzuordnen. Die Schleifscheibenunwucht wird mit Hilfe eines an die Schleifmaschine gehaltenen Meßgebers, an welchem ein Unwuchtmeßgerät angeschlossen ist, gemessen. Das Unwuchtmeßgerät ist auf die Drehzahl der Schleifscheibe eingestellt, so daß im wesentlichen nur Schwingungen, die die gleiche Frequenz wie die umlaufende Schleifscheibe haben, zur Anzeige kommen. Aus diesen Schwingungen wird dann die Unwucht ermittelt.

Hierbei ist es erforderlich, für die Unwuchtmessung der Schleifscheibe die Ausgleichsgewichte von der Schleifscheibe zu entfernen, damit man die tatsächliche Unwucht der Schleifscheibe während des Meßvorgangs ermittelt. In Abhängigkeit von der gemessenen Unwucht werden dann die Ausgleichsgewichte wieder an der Schleifscheibe befestigt. Das Demontieren und Wiederbefestigen der Ausgleichsgewichte erfordert einen raltiv großen Zeitaufwand und ein sehr genaues Arbeiten, damit die Ausgleichsgewichte in den richtigen Positionen zum Ausgleich der verhandenen Unwucht befestigt werden.

Auch das manuelle Verstellen der Gewichte eines auf die Schleifscheibe aufgesetzten Wuchtkopfes während der Rotation bis zur Beseitigung der gemessenen Unwucht bedeutet einen von einer Bedienungsperson aufzubringenden gewissen Zeitaufwand.

Aufgabe der Erfindung ist es, ein Verfahren und Vorrichtungen der eingangs genannten Art zu schaffen, bei denen der Unwuchtausgleich an der Schleifscheibe mit verringertem Zeitaufwand durchgeführt werden kann.

Diese Aufgabe wird erfindungsgemäß dadurch gelöst, daß die Ausgleichsgewichte beim Unwuchtmeßvorgang an der Schleifscheibe in von einer Auswerteeinrichtung gespeicherten Positionen befestigt sind und daß für den Unwuchtausgleich bei der Ermittlung der Neupositionierung der Ausgleichsgewichte durch die Auswerteeinrichtung die Krafteinflüsse der Ausgleichsgewichte kompensiert werden.

Bei Verwendung von zwei Ausgleichsgewichten werden diese zu beiden Seiten einer um 180° zur ermittelten Unwuchtwinkellage gedrehten Winkellage angeordnet. Bei Verwendung von drei Ausgleichsgewichten wird eines der Ausgleichsgewichte insbesondere in der um 180° gegenüber der Unwuchtwinkellage gedrehten Winkellage angeordnet und die beiden übrigen Ausgleichsgewichte zu beiden Seiten dieser Winkellage. Bei ungleichen Ausgleichsgewichten kann die ermittelte Unwucht auch in Komponenten für den Ausgleich durch die zur Verfügung stehenden Ausgleichsgewichte aufgeteilt werden.

Zur Kompensation der Krafteinflüsse der Ausgleichsgewichte während der Unwuchtmessung werden die aus den gespeicherten Positionen, d. h. den jeweiligen Radien und Winkellagen und den jeweiligen Massen der an der Schleifscheibe verbliebenen Ausgleichsgewichte, sich ergebenden Kraftvektoren ermittelt. Zu diesen Kraftvektoren entgegengesetzte Kraftvektoren, welche von den eingesetzten, an der Schleifscheibe verbliebenen Ausgleichsgewichten ausgeglichene Unwuchtvektoren sind, werden zum gemessenen Unwuchtvektor vektoriell addiert. Der sich hierbei ergebende Unwuchtvektor ist der tatsächliche Schleifscheibenunwuchtvektor. Dieser Schleifscheibenunwuchtvektor wird dann durch Neupositionierung der Ausgleichsgwichte an der Schleifscheibe, d.h. in bestimmten Radien und Winkellagen, ausgeglichen. Hierzu können die Ausgleichsgewichte auf variablen Radien um die Drehachse der Schleifscheibe bewegbar sein. Auch ist es möglich, die Ausgleichsgewichte auf konstanten Radien um die Drehachse der Schleifscheibe zu führen. Ferner ist es möglich, die Ausgleichsgewichte auf einem gemeinsamen Radius um die Drehachse der Schleifscheibe bewegbar zu führen.

Den geringsten Aufwand und eine hohe Ausgleichsgüte, insbesondere bei geringfügigen Unwuchten, erreicht man, wenn für die Ausgleichsgewichte die gleiche Masse jeweils verwendet wird und die Ausgleichsgewichte auf einem gemeinsamen Radius um die Drehachse der Schleifscheibe für die Positionierung geführt

2

werden.

Die erfindungsgemäße Vorrichtung zum Unwuchtausgleich an der Schleifscheibe besitzt eine Auswerteeinrichtung, die an das Unwuchtmeßgerät angeschlossen ist. In dieser Auswerteeinrichtung sind den Ausgleichsgewichten zugeordnete Vektorspeicher vorgesehen. In den Vektorspeichern sind in Abhängigkeit von den jeweiligen Massen, Radien und Winkellagen der Ausgleichsgewichte, die während des Unwuchtmeßlaufs an der Schleifscheibe verbleiben, die dadurch ausgeglichenen Unwuchtvektoren gespeichert. An diese Vektorspeicher ist ein Vektoraddierer angeschlossen, der ferner mit der Ausgangsseite des Unwuchtmeßgeräts verbunden ist und ein der gemessenen Unwucht entsprechendes Signal empfängt. Im Vektoraddierer werden bei einem Unwuchtmeßlauf, bei welchem die Schleifscheibe mit einer bestimmten Meßdrehzahl umläuft, die Kraftvektoren, welche dabei von den an der Schleifscheibe befestigten Ausgleichsgewichten ausgeglichen werden, und das von der Meßeinrichtung gelieferte Unwuchtmeßsignal addiert. In Abhängigkeit von dem dabei ermittelten Vektor, der der Unwuchtvektor der bloßen Schleifscheibe ohne Ausgleichsgewichte ist, erfolgt dann der Unwuchtausgleich durch Neupositionierung der Ausgleichsgewichte.

Das erfindungsgemäße Verfahren und die erfindungsgemäße Vorrichtung können nicht nur zum statischen Auswuchten in einer Ebene, sondern auch zum dynamischen Auswuchten in zwei oder mehr Ebenen verwendet werden, wobei dann in der jeweiligen Ebene der entsprechende Unwuchtmeß- und Unwuchtausgleichsvorgang durchgeführt wird.

Da bei der Erfindung die Ausgleichsgewichte während des Unwuchtmeßlaufs an der Schleifscheibe verbleiben können, erreicht man eine erhebliche Zeiteinsparung beim Unwuchtausgleich der Schleifscheibe.

Anhand der beigefügten Figuren wird an Ausführungsbeispielen die Erfindung noch näher erläutert. Es zeigt:

Fig. 1              ein Blockschaltbild eines ersten Ausführungsbeispiels;

Fig. 2              ein Blockschaltbild eines zweiten Ausführungsbeispiels;

Fig. 3(A) und 3(B)  Vektordiagramme zur Erläuterung der Arbeitsweise des Ausführungsbeispiels der Fig. 1; und

Fig. 4(A) und 4(B)  Vektordiagramme zur Erläuterung der Arbeitsweise des Ausführungsbeispiels der Fig. 2.

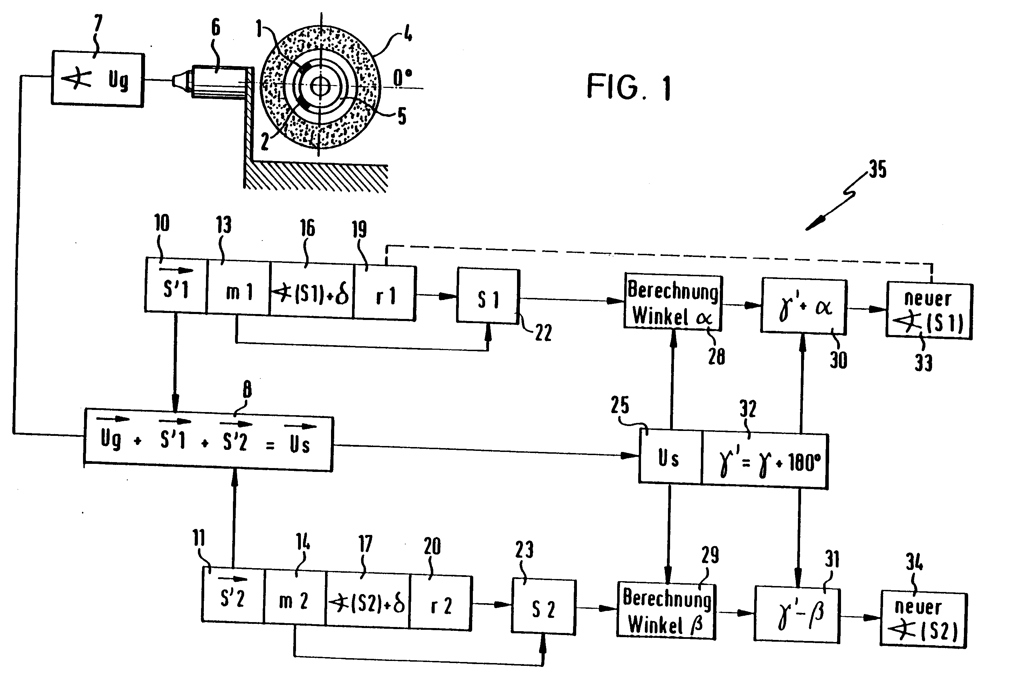

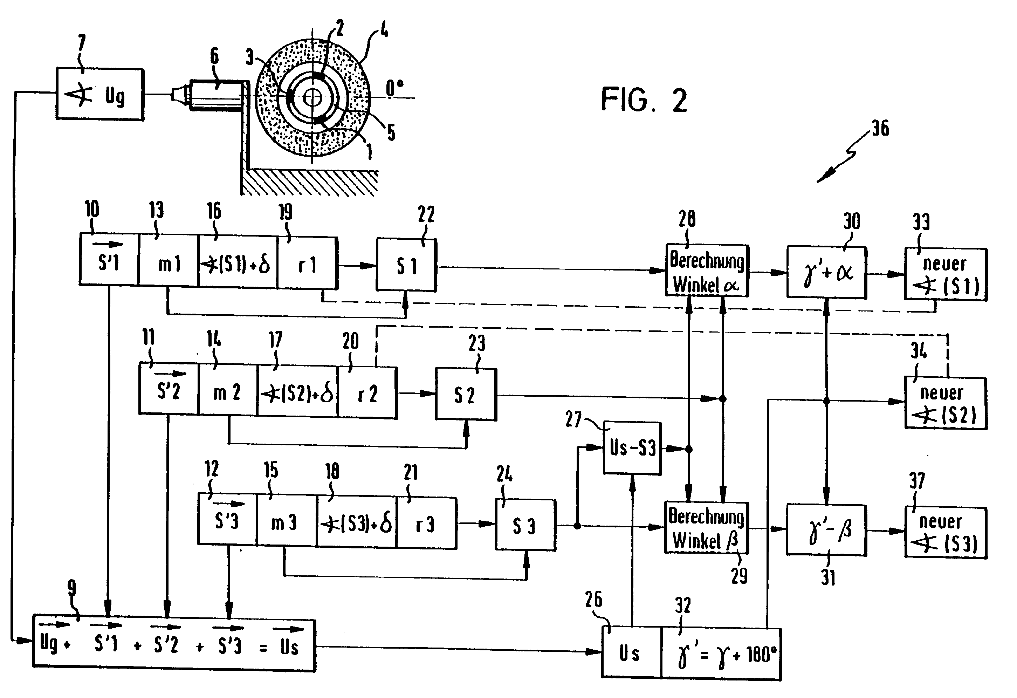

Bei den in den Figuren 1 und 2 dargestellten Ausführungsbeispielen werden die Unwuchtmessungen an einer Schleifscheibe 4 mit Hilfe eines Meßwertaufnehmers 6 gemessen. Der Meßwertaufnehmer 6 erfaßt die von der Unwucht erzeugten Schwingungen und liefert ein entsprechendes elektrisches Schwingungssignal an ein Unwuchtmeßgerät 7, das auf die Drehzahl der Schleifscheibe 4 beim Unwuchtmeßlauf eingestellt ist. Hierdurch wird gewährleistet, daß nur schleifscheibenfrequente Schwingungsanteile vom Unwuchtmeßgerät 7 erfaßt werden und hieraus die Unwucht der Schleifscheibe 4 nach Größe und Winkellage bestimmt wird. Es handelt sich hier um die gemessene Unwucht Ug

Bei dem Ausführungsbeispiel der Fig. 1 sind während des Unwuchtmeßlaufs die Ausgleichsgewichte 1 und 2 in Form von Ausgleichssteinen in einer Führungsnut 5 befestigt. In dieser Führungsnut 5 können die Ausgleichsgewichte 1 und 2 um die Drehachse der Schleifscheibe 4 auf einen bestimmten Radius in gewünschte Winkelpositionen gebracht werden.

Beim Ausführungsbeispiel der Fig. 2 sind drei Ausgleichsgewichte 1, 2 und 3 in der Führungsnut 5 vorhanden. Diese können ebenfalls in die gewünschten Winkelpositionen gebracht werden, damit ein Unwuchtausgleich erreicht wird.

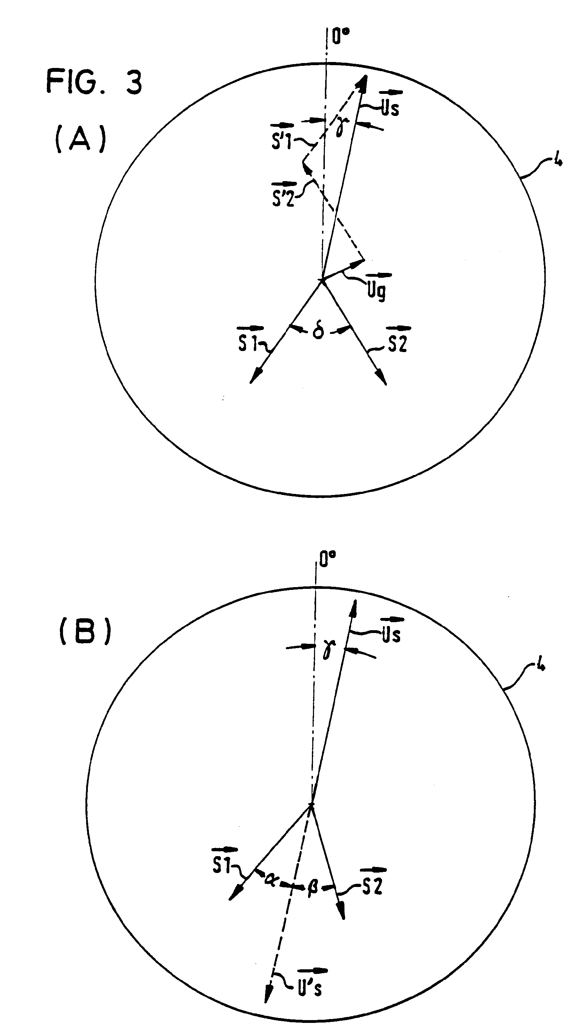

Die Ausgangsseite des Unwuchtmeßgeräts 7 ist in Fig. 1 an eine Auswerteeinrichtung 35 angeschlossen. Diese Auswerteeinrichtung 35 besitzt Vektorspeicher 10 und 11. In diesen Vektorspeichern sind Kraftvektoren S'1 und S'2 gespeichert (Fig. 3A). Diese Kraftvektoren ergeben sich aus den jeweiligen Massen der beiden Ausgleichsgewichte 1 und 2, ihren Radien, auf denen sie auf der Schleifscheibe 4 um die Schleifscheibendrehachse angeordnet sind, und der jeweiligen Winkellage gegenüber einer Nullposition (0° in den Figuren). Hierdurch ist berücksichtigt, daß die Ausgleichsgewichte 1, 2 auch auf unterschiedlichen Radien um die Schleifscheibendrehachse in entsprechenden Führungsnuten geführt werden können und die Ausgleichsgewichte 1 und 2 unterschiedliche Massen aufweisen können. An den Vektorspeicher 10 sind daher weitere Speicher angeschlossen, nämlich ein Speicher 13, in welchem die Masse m1 des Ausgleichsgewichts 1, ein Speicher 16, in welchem die Winkellage des Ausgleichsgewichts 1 und ein Bezugswinkel δ, und ein Speicher 19, in welchem der Radius r1, auf welchem das Ausgleichsgewicht 1 um die Drehachse der Schleifscheibe 4 bewegbar ist, gespeichert sind. Anstelle der Speicher 13, 16 und 19 können auch entsprechende Eingabevorrichtungen vorgesehen sein, um die entsprechenden Werte in den Vektorspeicher 10 einzugeben. In der gleichen Weise sind an den Vektorspeicher 11 ein Massespeicher 14, in welchem die Masse m2 des Ausgleichsgewichtes 1 gespeichert ist, ein Winkelspeicher 17, in welchem die Winkellage des Ausgleichsgewichtes 2 und ein Bezugswinkel δ gespeichert sind, und ein Radiusspeicher 20, in welchem der Radius r2, auf welchem das Ausgleichsgewicht 2 um die Drehachse der Schleifscheibe 4 geführt ist, gespeichert ist, angeschlossen. Auch hier können anstelle der Speicher 14, 17 und 20 entsprechende Eingabeeinrichtungen, mit welchen die gespeicherten Größen in den Vektorspeicher 11 eingegeben werden, vorgesehen sein. Die in den beiden Vektorspeichern 10 und 11 gespeicherten Vektoren S'1 und S'2 entsprechen Unwuchtkomponenten, welche von den an der Schleifscheibe 4 vorhandenen Ausgleichsgewichten 1 und 2 während der Schleifscheibendrehung, insbesondere während des Meßlaufs, ausgeglichen werden. Hierzu erzeugen die Ausgleichsgewichte 1 und 2 Kraftvektoren S1 und S2. Im einzelnen ist die Lage dieser Vektoren in der Fig. 3A dargestellt. Die Auswerteeinrichtung 35 besitzt ferner einen Vektoraddierer 8, an welchem die beiden Vektorspeicher 10 und 11 angeschlossen sind. Ferner ist der Vektoraddierer 8 an die Ausgangsseite des Unwuchtmeßgeräts 7 angeschlossen. Diesem Vektoraddierer 8 werden die Vektoren S'1 und S'2 sowie der gemessene Unwuchtvektor Ug zugeführt. Im Vektoraddierer erfolgt eine Addition dieser drei Vektoren, wobei der Schleifscheibenunwuchtvektor Us nach folgender Beziehung ermittelt wird:

$$Us = S'1 + S'2 + Ug$$

Der Schleifscheibenunwuchtvektor Us ist ein Maß für die Urunwucht, welche die Schleifscheibe 4 bei entfernten Ausgleichsgewichten 1 und 2 besitzen würde. Ein dieser Urunwucht entsprechendes Ausgangssignal, welches die Unwuchtgröße Us und die Winkellage $\gamma$ dieser Unwucht beinhaltet, wird an der Ausgangsseite des Vektoraddierers 8 geliefert. Der Unwuchtvektor Us für die Schleifscheibe 4 ist in der Fig. 3A ebenfalls dargestellt. Dieser Unwuchtvektor hat eine Richtung, die gegenüber einer Nullgrad-Position (Bezugsposition) einen Winkel $\gamma$. Die Nullgrad-Position (Bezugsposition) auf der Schleifscheibe 4 ist gegeben durch die um 180° verdrehte Lage der Winkelhalbierenden eines Spreizwinkels $\delta$, den die Winkelpositionen der beiden Ausgleichsgewichte 1 und 2, die während des Unwuchtmeßlaufs an der Schleifscheibe 4 verbleiben, einschließen.

Das Ausgangssignal des Vektoraddierers 8 wird einem Absolutwertrechner 25 zugeleitet, der die skalare Größe des Unwuchtvektors Us berechnet. Ferner wird das Ausgangssignal des Vektoraddierers 8 einer 180°-Schaltung 32 zugeführt, in welcher ein zur Richtung des Unwuchtvektors Us um 180° gedrehter Richtungswinkel ($\gamma$ + 180°) berechnet wird. Um die Unwucht der Schleifscheibe 4, welche durch den Unwuchtvektor Us angegeben ist, zu beseitigen, ist es erforderlich, daß durch die beiden Ausgleichsgewichte 1 und 2 ein resultierender Kraftvektor erzeugt wird, der in Richtung des Winkels ($\gamma$ + 180°) wirkt. Dieser Kraftvektor ist in der Fig. 3B durch U's in strichlierter Darstellung gezeigt.

Zur Berechnung der Radien und Winkellagen, auf denen die beiden Ausgleichsgewichte 1 und 2 zur Kompensation der durch den Unwuchtvektor Us angegebenen Unwucht anzuordnen sind, erfolgt in der Auswerteeinrichtung 35 eine Berechnung der beiden Winkel $\alpha$ und $\beta$, die die Winkelpositionen der beiden Ausgleichsgewichte 1 und 2 gegenüber der Richtung des Kraftvektors U's haben sollen (Fig. 3B). Hierzu sind in der Auswerteeinrichtung 35 an die beiden Ausgänge des Absolutrechners 25 Cosinusbildner 28 und Cosinusbildner 29 angeschlossen. Im Cosinusbildner 28 wird der cos $\alpha$ und im Cosinusbildner 29 der cos $\beta$ berechnet. Der Cosinusbildner 28 ist hierzu an einen Skalarrechner 22 angeschlossen, der mit dem Massespeicher 13 für die Masse m1 des Ausgleichsgewichts 1 und den Radiusspeicher 19 für den Radius r1, auf welchem das Ausgleichsgewicht 1 angeordnet ist, angeschlossen ist. In diesem Skalarrechner 22 erfolgt die Berechnung der skalaren Größe S1 nach folgender Beziehung:

$$S1 = m1 \times r1$$

Des gleichen ist der Cosinusbildner 29 an den Skalarrechner 23 angeschlossen. Dem Skalarrechner 23 wird die im Massespeicher 14 gespeicherte Masse m2 des Ausgleichsgewichts 2 und der im Radiusspeicher 20 gespeicherte Radius r2, auf welchem das Ausgleichsgewicht 2 angeordnet ist, zugeleitet. Im Skalarrechner 23 wird die skalare Größe S2 nach folgender Beziehung berechnet:

$$S2 = m2 \times r2.$$

Im Cosinusbildner 28 wird folgender Rechenvorgang durchgeführt:

$$\cos\alpha = \frac{Us}{2 \times S1}$$

Im Cosinusbildner 29 wird folgender Rechenvorgang durchgeführt:

$$\cos\beta = \frac{Us}{2 \times S2}$$

An ihren jeweiligen Ausgangsseiten liefern die Cosinusbildner 28 und 29 den Winkeln $\alpha$ und $\beta$ proportionale Ausgangssignale. Diese Ausgangssignale werden im Falle des Winkelsignals für den Winkel $\alpha$ einem Winkeladdierer 30 und im Falle des Winkelsignals für den Winkel $\beta$ einem Winkelsubtrahierer 31 zugeführt. Ein weiterer Eingang des Winkeladdierers 30 ist mit der 180°-Schaltung 32 verbunden, und im Winkeladdierer wird die Winkelposition des Ausgleichsgewichts 1 gegenüber der Bezugslage bzw. Nullgrad-Position an der Schleifscheibe 4 durch die Winkeladdition $\gamma$ + 180 + $\alpha$ berechnet.

Ferner ist ein Eingang des Winkelsubtrahierers 31 mit der 180°-Schaltung 32 verbunden. Im Winkelsubtrahierer 31 wird zur Errechnung der Winkelposition des Ausgleichsgewichtes 2 gegenüber der Nullgrad-Position an der Schleifscheibe 4 die Winkelsubtraktion ($\gamma$ + 180°) - $\beta$ durchgeführt.

Der Winkeladdierer 30 liefert ein Ausgangssignal, das der Winkelposition entspricht, in welcher das Ausgleichsgewicht 1 an der Schleifscheibe gegenüber der Nullgrad-Position anzuordnen ist. Dieser Winkelwert kann in einer an den Winkeladdierer 30 angeschlossenen Positionsanzeigeeinrichtung 33 angezeigt werden. Gleichzeitig kann in dieser Positionsanzeigeeinrichtung 33 gegebenenfalls auch der Radius r1 für das Ausgleichsgewicht 1 angegeben werden. Hierzu kann die Positionsanzeigeeinrichtung 33, wie durch eine strichlierte Linie dargestellt ist, mit dem Radiusspeicher 19 verbunden sein.

Ferner ist eine Positionsanzeigeeinrichtung 34 mit dem Winkelsubtrahierer 31 verbunden. Der Winkelsubtrahierer 31 liefert ein Ausgangssignal, das der Winkelposition entspricht, in welcher das Ausgleichsgewicht 2 gegenüber der Nullgrad-Position an der Schleifscheibe 4 anzuordnen ist. Diese Winkelposition wird an der Positionsanzeigeeinrichtung 34 angezeigt. Zur gleichzeitigen Anzeige des Radius r2, in welcher das Ausgleichsgewicht 2 anzuordnen ist, kann die Positionsanzeigeeinrichtung 34 auch mit dem Radiusspeicher 20 verbunden sein, wie es durch eine strichlierte Verbindungsleitung dargestellt ist.

Durch die neue Positionierung der Ausgleichsgewichte 1 und 2 in den angegebenen Winkelpositionen und an den angegebenen Radien um die Drehachse der Schleifscheibe 4 werden Kraftvektoren S1 und S2 erzeugt, die einen resultierenden Kraftvektor U's erzeugen, der dem auszugleichenden Unwuchtvektor Us der Schleifscheibe entgegengerichtet ist, wie es in der Fig. 3B dargestellt ist.

Die Auswerteeinrichtung 35 läßt sich wesentlich einfacher gestalten, wenn, wie in der Fig. 1 dargestellt ist, die beiden Ausgleichsgewichte 1 und 2 auf einem gleichen Radius um die Drehachse der Schleifscheibe 4 in der Führungsnut 5 geführt sind, und wenn ferner die beiden Ausgleichsgewichte 1 und 2 gleiche Masse haben. Man benötigt dann nur noch für die Eingabe der Positionswinkel unterschiedliche Eingabeeinrichtungen oder die beiden dargestellten Winkelspeicher 16 und 17, während für die Masse der Ausgleichsgewichte und den Radius, in welchem die Ausgleichsgewichte angeordnet sind, nur noch jeweils ein Speicher bzw. eine Eingabeeinrichtung erforderlich ist.

Bei dem in der Fig. 2 dargestellten Ausführungsbeispiel sind drei Ausgleichsgewichte 1, 2, 3 für den Unwuchtausgleich an der Schleifscheibe 4 vorgesehen. An der dargestellten Schleifscheibe 4 sind diese Ausgleichsgewichte in einer einzigen Führungsnut 5 vorgesehen, d. h. die Ausgleichsgewichte liegen auf einem gemeinsamen Radius um die Drehachse der Schleifscheibe 4. Eine in der Fig. 2 dargestellte Auswerteeinrichtung 36 ist jedoch so ausgelegt, daß die Ausgleichsgewichte 1, 2, 3 auf unterschiedlichen Radien an der Schleifscheibe 4 eingestellt werden können. Ferner ist die Auswerteeinrichtung 36 so ausgestaltet, daß die Ausgleichsgewichte 1, 2, 3 auch unterschiedliche Massen aufweisen können.

Der grundsätzliche Aufbau der Auswerteeinrichtung 36 ist der gleiche wie der Aufbau der in Fig. 1 dargestellten Auswerteeinrichtung 35. Für die Auswerteeinrichtung 36 sind ebenfalls Vektorspeicher 10 und 11 mit den zugeordneten Massespeichern 13 und 14, Radiusspeichern 19 und 20 sowie Winkelspeichern 16 und 17 für die Ausgleichsgewichte 1 und 2 vorgesehen, und ferner ein zusätzlicher Vektorspeicher 12 mit einem zugeordneten Massespeicher 15, einem zugeordneten Winkelspeicher 18 und einem zugeordneten Radiusspeicher 21 für die Ausgleichsmasse 3 vorgesehen. An den Massespeicher 15 und den Radiusspeicher 21 ist der Skalarrechner 24 angeschlossen.

Ferner sind die drei Vektorspeicher 10, 11 und 12, in denen die Unwuchtkomponentenvektoren S'1, S'2 und S'3 gespeichert sind, angeschlossen. Diese Unwuchtkomponentenvektoren S'1, S'2, S'3 entsprechen Unwuchtkomponenten, welche durch die an der Schleifscheibe 4 befestigten Ausgleichsgewichte 1, 2 und 3 ausgeglichen werden. Die Vektorspeicher 10, 11 und 12 sind an einen Vektoraddierer 9 angeschlossen. An diesen Vektoraddierer 9 ist ferner das Unwuchtmeßgerät 7 angeschlossen. Im Vektoraddierer 9 wird ebenfalls die Unwucht berechnet, welche die Schleifscheibe 4 ohne die Ausgleichsgewichte 1, 2 und 3 hat. Der entsprechende Unwuchtvektor Us ergibt sich nach folgender Beziehung:

$$Us = S'1 + S'2 + S'3 + Ug$$

Die gemessene Unwucht Ug wird von der Ausgangsseite des Unwuchtmeßgeräts 7 dem Vektoraddierer 9 zugeleitet.

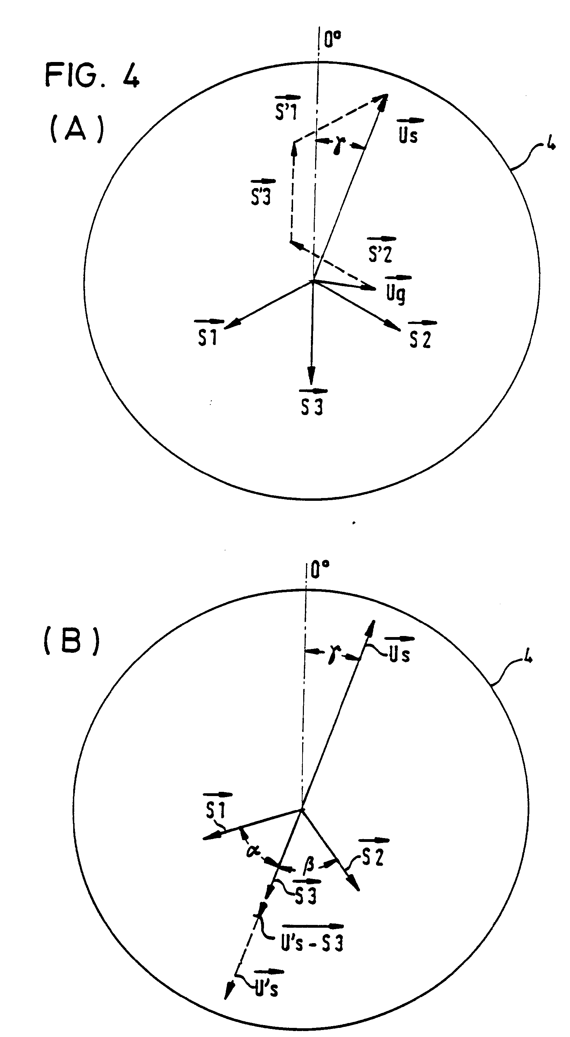

Am Ausgang liefert der Vektoraddierer 9 ein dem Unwuchtvektor Us entsprechendes Ausgangssignal. Dieses Ausgangssignal wird einem Absolutrechner 26 zugeleitet, der die Skalargröße Us des Unwuchtvektors Us ausrechnet. Ferner wird das Ausgangssignal des Vektoraddierers 9 der 180°-Schaltung 32 zugeleitet, die den Richtungswinkel $\gamma$ des Schleifscheibenunwuchtvektors Us um 180° dreht. Wie bei der Auswerteeinrichtung 35 wird auch durch die Auswerteeinrichtung 36 eine derartige Positionierung der Ausgleichsgewichte 1, 2 und 3 ermittelt, durch die ein resultierender Kraftvektor U's erzeugt wird, der dem Unwuchtvektor Us entgegengerichtet ist, wie das in der Fig. 4B dargestellt ist.

Hierzu ist zusätzlich in der Auswerteeinrichtung 36 ein Subtrahierer 27 an den Ausgang des Absolutrechners 26 angeschlossen. Im Subtrahierer 27 wird die skalare Differenz Us - S3 gebildet. S3 ist die aus dem dritten Ausgleichsgewicht 3 gewonnene skalare Größe S3, die nach folgender Beziehung gebildet wird:

$$S3 = m3 \times r3$$

Die Ausgangsseite des Skalarrechners 24 ist mit einer Eingangsseite des Subtrahierers 27 verbunden.

Des Ausgangssignal des Subtrahierers 27, welches der Differenz Us - S3 entspricht, wird den beiden Cosinusbildnern 28 und 29 zugeführt. Der Cosinusbildner 28 führt folgenden Rechenvorgang durch:

$$\cos\alpha = \frac{Us - S3}{2 \times S1}$$

Der Cosinusbildner 29 führt folgende Berechnung durch:

$$\cos\beta = \frac{Us - S3}{2 \times S2}$$

Wie die Fig. 2 zeigt, sind die Cosinusbildner 28 und 29 hierzu an die Skalarrechner 22 und 23 angeschlossen, wie das beim Ausführungsbeispiel der Fig. 1 ebenfalls der Fall ist. Die Funktionen des Winkeladdierers 30 der 180°-Schaltung 32 und des Winkelsubtrahierers 31 sind die gleichen wie beim Ausführungsbeispiel der Fig. 1, so daß zur weiteren Erläuterung hierauf verwiesen wird.

Die neuen Winkelpositionen für die Ausgleichsgewichte 1 und 2 werden in den Positionsanzeigeeinrichtungen 33 und 34, welche an den Winkeladdierer 30 und den Winkelsubtrahierer 31 angeschlossen sind, angezeigt. Ferner können in den Positionsanzeigeeinrichtungen 33 und 34 auch die Radien r1 und r2 angezeigt werden, auf denen die Ausgleichsgewichte 1 und 2 an der Schliefscheibe 4 angeordnet werden. Durch die strichlierten Verbindungslinien ist dies in der Fig. 2 dargestellt.

Ferner wird beim Ausführungsbeispiel der Fig. 2 das dritte Ausgleichsgewicht 3 wiederum um 180° versetzt zu der Richtung (Richtungswinkel $\gamma$) des Unwuchtvektors Us angeordnet. Die von den in den neuen Winkelpositionen angeordneten Ausgleichsgewichten 1, 2 und 3 erzeugten Kraftvektoren sind in der Fig. 4B mit S1, S2 und S3 bezeichnet. Durch diese Kraftvektoren wird die Schleifscheibenunwucht Us ausgeglichen.

In den Anzeigeeinrichtungen 33 und 34 werden die Winkellagen der Ausgleichsgewichte 1 und 2 gegenüber der Nullgrad-Position angegeben. Diese Nullgrad-Position (Bezugsposition) kann beispielsweise vor Beginn des Unwuchtmeßlaufs durch eine Markierung an der Schleifscheibe angegeben werden.

Bei den dargestellten Ausführungsbeispielen der Figuren 1 und 2 kann durch manuelle Verschiebung der Ausgleichsgewichte die Neupositionierung durchgeführt werden. Es ist jedoch auch möglich, durch eine nicht näher dargestellte Automatik die Verschiebung dieser Ausgleichsgewichte durchzuführen. Diese Verschiebeautomatik wird dann von den Ausgangssignalen des Winkeladdierers 30 und des Winkelsubtrahierers 31 angesteuert.

Ein bevorzugtes Ausführungsbeispiel für die Fig. 2 besteht darin, daß auch hier für die Ausgleichsgewichte 1, 2 und 3 die gleiche Masse verwendet wird. Ferner werden hierbei die drei Ausgleichsgewichte 1, 2 und 3, wie es in der Fig. 3 dargestellt ist, auf einem gleichen Radius um die Drehachse der Schleifscheibe 4 angeordnet.

Die in Figuren 1 und 2 dargestellten Auswerteeinrichtungen 35 und 36 können in Analog- oder Digitaltechnik ausgebildet sein. Bevorzugt wird die Digitaltechnik eingesetzt. Hierzu ist - falls das Ausgangssignal des Unwuchtmeßgeräts Analogform hat - der Auswerteeinrichtung 35 bzw. 36 ein nicht näher dargestellter Analog-Digitalumsetzer vorgeschaltet.

Die Unwuchtmessung und der Ausgleichsvorgang werden bevorzugt in einer Auswuchtsmaschine durchgeführt. Es ist jedoch auch möglich, diese Vorgänge an der in der Schliefmaschine eingebauten Schliefscheibe auszuführen.

## Patentansprüche

1. Verfahren zum Unwuchtausgleich an einer Schleifscheibe (4), bei dem nach einem Unwuchtmeßvorgang zum Ausgleich der gemessenen Schleifscheibenunwucht zwei oder drei Ausgleichsgewichte (1, 2; 3) an der Schleifscheibe (4) auf einem oder mehreren Radien um die Schleifscheibenachse in aus der auszugleichenden Unwucht errechneten Ausgleichspositionen befestigt werden,
dadurch **gekennzeichnet,**
daß die Ausgleichsgewichte beim Unwuchtmeßvorgang an der Schleifscheibe (4) in von einer Auswerteeinrichtung (35; 36) gespeicherten Positionen befestigt sind und daß für den Unwuchtausgleich bei der Ermittlung der Neupositionierung der Ausgleichsgewichte (1, 2; 3) durch die Auswerteeinrichtung (35; 36) die Krafteinflüsse der Ausgleichsgewichte kompensiert werden.

2. Verfahren nach Anspruch 1, dadurch gekennzeichnet, daß die Unwuchtvektoren, welche durch die aus den gespeicherten Positionen und den jeweiligen Massen der an der Schleifscheibe (4) verbliebenen Ausgleichsgewichte (1, 2; 3) sich ergebenden Kraftvektoren ausgeglichen werden, zum gemessenen Unwuchtvektor verktoriell addiert werden und der bei der Addition sich ergebende Schleifscheibenunwuchtvektor durch die Neupositionierung der Ausgleichsgewichte (1, 2; 3) an der Schleifscheibe (4) ausgeglichen wird.

3. Verfahren nach Anspruch 1 oder 2, dadurch gekennzeichnet, daß bei Verwendung von zwei Ausgleichsgewichten (1, 2) das jeweilige Ausgleichsgewicht in einem Winkel ($\alpha$ bzw. $\beta$) gegenüber der um 180° gedrehten Winkellage des Schleifscheibenunwuchtvektors angeordnet wird, welche im Falle gleicher Ausgleichsgewichte folgenden Gleichungen genügen:

$$\cos\alpha \;=\; \frac{Us}{2 \times S1}$$

bzw.

$$\cos\beta \;=\; \frac{Us}{2 \times S2}$$

und welche im Falle unterschiedlicher Ausgleichsgewichte folgenden Gleichungen genügen:

$$\cos\beta \;=\; \frac{U_s{}^2 + S_1{}^2 - S_2{}^2}{2 \cdot U_s \cdot S_1}$$

und

$$\sin\alpha \;=\; \frac{s_1}{S_2} \cdot \sin\beta \,.$$

wobei Us den Betrag des Schleifscheibenunwuchtvektor, S1 die aus der Masse des einen Ausgleichsgewichts (1) und dem Radius, auf welchem dieses Gewicht um die Drehachse der Schleifscheibe (4) bewegt wird, sich ergebende skalare Größe und S2 die aus der Masse des anderen Ausgleichsgewichts (2) und dem Radius, auf welchem dieses Ausgleichsgewicht um die Drehachse der Scheifscheibe (4) bewegt wird, sich ergebende skalare Größe bedeuten.

4. Verfahren nach Anspruch 1 oder 2, dadurch gekennzeichnet, daß bei Verwendung von drei Ausgleichsgewichten (1, 2, 3) das eine der drei Ausgleichsgewichte in einer gegenüber der Winkellage des Schleifscheibenunwuchtvektors um 180° gedrehten Winkellage angeordnet wird und die jeweiligen beiden anderen Ausgleichsgewichte in auf die um 180° gedrehte Winkellage des Schleifscheibenunwuchtvektors bezogene Winkellagen ($\alpha$) bzw. ($\beta$) angeordnet werden, welche im Falle gleicher Ausgleichsgewichte den folgenden Gleichungen genügen:

$$\cos\alpha \;=\; \frac{Us - S3}{2 \times S1}$$

bzw.

$$\cos\beta \;=\; \frac{Us - S3}{2 \times S2}$$

und welche im Falle unterschiedlicher Ausgleichsgewichte den folgenden Gleichungen genügen:

$$\cos\beta \;=\; \frac{(U_s - S_2)^2 + S_1{}^2 - S_3{}^2}{2 \cdot (U_s - S_2)^2 \cdot S_1}$$

und

$$\sin\alpha \;=\; \frac{S_1}{S_3} \cdot \sin\beta$$

wobei Us der Betrag des Schleifscheibenunwuchtvektors und S1, S2, S3 die aus den jeweiligen Massen der drei Ausgleichsgewichte (1, 2, 3) und den jeweiligen Radien, auf denen die Ausgleichsgewichte um die Schleifscheibendrehachse bewegt werden, sich ergebenden skalaren Größen bedeuten.

5. Verfahren nach einem der Ansprüche 1 bis 4, dadurch gekennzeichnet, daß Ausgleichsgewichte, die auf variablen Radien um die Drehachse der Schleifscheibe (4) bewegbar sind, verwendet werden.

6. Verfahren nach einem der Ansprüche 1 bis 4, dadurch gekennzeichnet, daß Ausgleichsgewichte, die auf konstanten Radien um die Drehachse der Schleifscheibe bewegbar sind, verwendet werden.

7. Verfahren nach einem der Ansprüche 1 bis 4, dadurch gekennzeichnet, daß Ausgleichsgewichte (1, 2; 3), die auf einem gemeinsamen Radius um die Drehachse der Schleifscheibe (4) bewegbar sind, verwendet werden.

8. Verfahren nach einem der Ansprüche 1 bis 7, dadurch gekennzeichnet, daß Ausgleichsgewichte mit gleicher Masse verwendet werden.

9.  Vorrichtung zum Unwuchtausgleich an einer Schleifscheibe (4) mit einer Meßwertaufnahmeeinrichtung (6) und einem daran angeschlossenen Unwuchtmeßgerät (7) sowie mit einer Auswerteeinrichtung (35) in der die Positionierung von zwei an der Schleifscheibe (4) führbaren und befestigbaren Ausgleichsgewichten (1, 2) in Abhängigkeit von der gemessenen Unwucht ermittelt wird, zur Durchführung des Verfahrens nach einem des Ansprüche 1 bis 3, dadurch gekennzeichnet, daß

- den zwei Ausgleichsgewichten (1, 2) jeweils ein Vektorspeicher (10, 11) zugeordnet ist, in welchem in Abhängigkeit von der Masse und Positionierung des jeweiligen Ausgleichsgewichts (1, 2) an der Schleifscheibe (4) ein dadurch ausgeglichener Unwuchtvektor gespeichert ist.
- an die Vektorspeicher (10, 11) ein Vektoraddierer (8), der mit dem Ausgang des Unwuchtmeßgeräts (7) verbunden ist, angeschlossen ist;
- an den Vektoraddierer (8) eine 180°-Schaltung (32), die die Richtung $\gamma$ des vom Vektoraddierer (8) gebildeten Vektors um 180° dreht und ein entsprechendes ($\gamma$ + 180°)-Winkelsignal liefert, angeschlossen ist;
- der eine Ausgang der 180°-Schaltung (32) an einen Eingang eines Winkeladdierers (30) angeschlossen ist, welcher von einem ersten Winkelberechner (28) ein einem Winkel ($\alpha$) entsprechendes Signal empfängt, wobei der erste Winkelberechner (28) den Winkel ($\alpha$) aus dem Absolutwert des vom Vektoraddierer (8) gelieferten Ausgangssignals sowie einer skalaren Größe (S1) berechnet, die aus der Masse des einen Ausgleichsgewichts (1) und dem Radius, auf welchem dieses Ausgleichsgewicht (1) auf der Schleifscheibe (4) um die Schleifscheibendrehachse geführt ist, gebildet ist; und
- der andere Ausgang der 180°-Schaltung (32) an einen Winkelsubtrahierer (31) angeschlossen ist, welcher von einem zweiten Winkelberechner (29) ein einem Winkel ($\beta$) entsprechendes Signal empfängt, wobei der zweite Winkelberechner (29) den Winkel ($\beta$) aus dem Absolutwert des vom Vektoraddierer (8) gelieferten Ausgangssignals sowie einer skalaren Größe (S2) berechnet, die aus der Masse des anderen Ausgleichsgewichts (2) und dem Radius, auf welchem dieses andere Ausgleichsgewicht (2) auf der Schleifscheibe (4) um die Schleifscheibendrehachse geführt ist, gebildet ist.

10. Vorrichtung zum Unwuchtausgleich an einer in einer Schleifmaschine eingebauten Schleifscheibe (4) mit einer Meßwertaufnehmereinrichtung (6) und einem daran angeschlossenen Unwuchtmeßgerät (7) sowie mit einer Auswerteeinrichtung (36), in der die Positionierung von drei an der Schleifscheibe (4) führbaren und befestigbaren Ausgleichsgewichten (1, 2, 3) in Abhängigkeit von der gemessenen Unwucht ermittelt wird, zur Durchführung des Verfahrens nach einem der Ansprüche 1, 2 und 4, dadurch gekennzeichnet, daß

- den drei Ausgleichsgewichten (1, 2, 3) jeweils ein Vektorspeicher (10, 11, 12) zugeordnet ist, in welchem in Abhängigkeit von der Masse und Positionierung des jeweiligen Ausgleichsgewichts (1, 2, 3) an der Schleifscheibe (4) ein dadurch ausgeglichener Unwuchtvektor gespeichert ist.
- an die Vektorspeicher (10, 11, 12) ein Vektoraddierer (9), der mit dem Ausgang des Unwuchtmeßgeräts (7) verbunden ist, angeschlossen ist;
- an den Vektoraddierer (9) eine 180°-Schaltung (32), die die Richtung des vom Vektoraddierer (8) gebildeten Vektors um 180° dreht und ein entsprechendes ($\gamma$ + 180°)-Winkelsignal liefert, angeschlossen ist;
- diese Winkellage ($\gamma$ + 180°) für die Positionierung eines der drei Ausgleichsgewichte (1, 2, 3) bestimmt ist;
- an den Ausgang des Vektoraddierers (9) ein Absolutwertrechner (26) angeschlossen ist, der die skalare Größe des vom Vektoraddierer (9) gelieferten Vektors bildet,
- an den Absolutwertrechner (26) ein Subtrahierer (27) angeschlossen ist, der die Differenz aus der skalaren Größe des vom Vektoraddierer (9) gelieferten Vektors sowie der skalaren Größe (S2) berechnet, die aus der Masse des in der ($\gamma$ + 180°)-Winkellage anzuordnenden Ausgleichsgewichts (3) und dem Radius, auf welchem das Ausgleichsgewicht (2) auf der Schleifscheibe (4) um die Schleifscheibendrehachse geführt ist, gebildet ist;
- der eine Ausgang der 180°-Schaltung (32) an einen Eingang eines Winkeladdierers (30) angeschlossen ist, der von einem an den Subtrahierer (27) angeschlossenen ersten Winkelberechner (28) ein dem gebildeten Cosinuswert entsprechendes Winkelsignal (Winkel $\alpha$) empfängt, wobei dieses Winkelsignal errechnet ist aus den dem ersten Winkelberechner (28) zugeleiteten skalaren Größen (53,S1), die aus den Massen der beiden Ausgleichsgewichte und den Radien, auf welchen diese Ausgleichsgewichte (3,1) um die Schleifscheibendrehachse geführt sind, gebildet sind; und
- der andere Ausgang der 180°-Schaltung (32) an einen Eingang eines Winkelsubtrahierers (31) angeschlossen ist, der von einem an den Subtrahierer (27) angeschlossenen zweiten Winkelberechner (29) ein dem gebildeten Cosinuswert entsprechendes Winkelsignal (Winkel $\beta$) empfängt, wobei die-

ses Winkelsignal errechnet ist aus einer dem zweiten Winkelberechner (29) zugeleiteten skalaren Größe (S2), die aus der Masse des anderen der beiden verbleibenden Ausgleichsgewichte und dem Radius, auf welchem dieses Ausgleichsgewicht (2) um die Schleifscheibenachse geführt ist, gebildet ist.

**Claims**

1. A method of compensating for unbalance on a grinding wheel (4) wherein, after an unbalance measuring operation, to compensate for the measured unbalance of the grinding wheel, two or three compensating weights (1, 2; 3) are secured to the grinding wheel (4) on one or more radii around the axis of the grinding wheel in compensating positions which are calculated from the unbalance to be compensated, characterised in that in the unbalance measuring operation the compensating weights are secured to the grinding wheel (4) in positions which are stored by an evaluation means (35; 36) and that the force influences of the compensating weights are compensated for unbalance compensation when ascertaining repositioning of the compensating weights (1, 2; 3) by the evaluation means (35; 36).

2. A method according to claim 1 characterised in that the unbalance vectors which are compensated by the force vectors which result from the stored positions and the respective masses of the compensating weights (1, 2; 3) which have remained on the grinding wheel (4) are compensated, and vectorially added to the measured unbalance vector, and the grinding wheel unbalance vector which is produced in the addition operation is compensated by repositioning of the compensating weights (1, 2; 3) on the grinding wheel (4).

3. A method according to claim 1 or claim 2 characterised in that, when using two compensating weights (1, 2), the respective compensating weight is arranged at an angle ($\alpha$ and $\beta$ respectively) relative to the angular position, which is turned through 180°, of the grinding wheel unbalance vector, which angles in the case of equal compensating weights satisfy the following equations:

$$\cos\alpha = \frac{Us}{2 \times S1}$$

and

$$\cos\beta = \frac{Us}{2 \times S2}$$

and which in the case of different compensating weights satisfy the following equations:

$$\cos\beta = \frac{U_s^2 + S_1^2 - S_2^2}{2 \cdot U_s \cdot S_1}$$

and

$$\sin\alpha = \frac{S_1}{S_2} \cdot \sin\beta$$

wherein Us designates the magnitude of the grinding wheel unbalance vector, S1 designates the scalar value which results from the mass of the one compensating weight (1) and the radius at which that weight is moved around the axis of rotation of the grinding wheel (4) and S2 designates the scalar value which results from the mass of the other compensating weight (2) and the radius at which said compensating weight is moved around the axis of rotation of the grinding wheel (4).

4. A method according to claim 1 or claim 2 characterized in that, when using three compensating weights (1, 2, 3) one of the three compensating weights is arranged at an angular position which is turned through 180° relative to the angular position of the grinding wheel unbalance vector and the respective two other compensating weights are arranged at angular positions ($\alpha$) and ($\beta$) which are related to the angular position, which is turned through 180°, of the grinding wheel unbalance vector, which angles in the case of equal compensating weights satisfy the following equations:

$$\cos\alpha = \frac{Us - S3}{2 \times S1}$$

and

$$\cos\beta = \frac{Us - S3}{2 \times S2}$$

and which in the case of different compensating weights satisfy the following equations:

$$\cos\beta = \frac{(U_s - S_2)^2 + S_1^2 - S_3^2}{2 . (U_s - S_2)^2 . S_1}$$

and

$$\sin\alpha = \frac{S_1}{S_3} . \sin\beta$$

wherein Us designates the magnitude of the grinding wheel unbalance vector and S1, S2 and S3 designate the scalar values which result from the respective masses of the three compensating weights (1, 2, 3) and the respective radii at which the compensating weights are moved around the axis of rotation of the grinding wheel.

5. A method according to one of claims 1 to 4 characterised in that compensating weights which are movable on variable radii around the axis of rotation of the grinding wheel (4) are used.

6. A method according to one of claims 1 to 4 characterised in that compensating weights which are movable on constant radii around the axis of rotation of the grinding wheel are used.

7. A method according to one of claims 1 to 4 characterised in that compensating weights (1, 2; 3) which are movable on a common radius around the axis of rotation of the grinding wheel (4) are used.

8. A method according to one of claims 1 to 7 characterised in that compensating weights of the same mass are used.

9. Apparatus for compensating for unbalance on a grinding wheel (4) comprising a measurement value detecting means (6) and an unbalance measuring device (7) connected thereto, and an evaluation means (35) in which the positioning of two compensating weights (1, 2) which can be guided on and secured to the grinding wheel (4) is ascertained in dependence on the measured unbalance, for carrying out the method according to one of claims 1 to 3, characterised in that
   - associated with each of the two compensating weights (1, 2) is a respective vector storage means (10, 11) for storing in dependence on the mass and positioning of the respective compensating weight (1, 2) on the grinding wheel (4) an unbalance vector which is compensated thereby,
   - connected to the vector storage means (10, 11) is a vector adding means (8) which is connected to the output of the unbalance measuring device (7),
   - connected to the vector adding means (8) is a 180°-circuit (32) which turns through 180° the direction $\gamma$ of the vector formed by the vector adding means (8) and supplies a corresponding ($\gamma$+ 180°)-angle signal,
   - the one output of the 180°-circuit (32) is connected to an input of an angle adding means (30) which receives from a first angle calculating means (28) a signal which corresponds to an angle ($\alpha$), wherein the first angle calculating means (28) calculates the angle ($\alpha$) from the absolute value of the output signal supplied by the vector adding means (8) and a scalar value (S1) which is formed from the mass of the one compensating weight (1) and the radius at which said compensating weight (1) is guided on the grinding wheel (4) around the axis of rotation of the grinding wheel, and
   - the other output of the 180°-circuit (32) is connected to an angle subtracting means (31) which receives from a second angle calculating means (29) a signal corresponding to an angle ($\beta$), wherein the second angle calculating means (29) calculates the angle ($\beta$) from the absolute value of the output signal supplied by the vector adding means (8) and a scalar value (S2) which is formed from the mass of the other compensating weight (2) and the radius at which said other compensating weight (2) is guided on the grinding wheel (4) around the axis of rotation of the grinding wheel.

10. Apparatus for compensating for unbalance on a grinding wheel (4) installed in a grinding machine, comprising a measurement value detector means (6) and an unbalance measuring device (7) connected thereto, and an evaluation means (36) in which the positioning of three compensating weights (1, 2, 3) which can be guided on and secured to the grinding wheel (4) is ascertained in dependence on the measured unbalance, for carrying out the method according to one of claims 1, 2 and 4, characterised in that
   - associated with each of the three compensating weights (1, 2, 3) is a respective vector storage means (10, 11, 12) for storing in dependence on the mass and positioning of the respective compensating weight (1, 2, 3) on the grinding wheel (4) an unbalance vector which is compensated thereby,
   - connected to the vector storage means (10, 11, 12) is a vector adding means (9) which is connected to the output of the unbalance measuring device (7),

- connected to the vector adding means (9) is a 180°-circuit (32) which turns through 180° the direction of the vector formed by the vector adding means (8) and supplies a corresponding ($\gamma$ + 180°)-angle signal,
- that angular position ($\gamma$ + 180°) is determined for positioning of one of the three compensating weights (1, 2, 3),
- connected to the output of the vector adding means (9) is an absolute value calculating means (26) which forms the scalar value of the vector supplied by the vector adding means (9),
- connected to the absolute value calculating means (26) is a subtracting means (27) which calculates the difference of the scalar value of the vector supplied by the vector adding means (9) and the scalar value (S2) which is formed from the mass of the compensating weight (3) to be arranged at the ($\gamma$ + 180°)-angular position and the radius at which the compensating weight (2) is guided on the grinding wheel (4) around the axis of rotation of the grinding wheel,
- the one output of the 180°-circuit (32) is connected to an input of an angle adding means (30) which receives from a first angle calculating means (28) connected to the subtracting means (27) an angle signal (angle $\alpha$) corresponding to the cosine value formed, wherein said angle signal is calculated from the scalar values (S3, S1) which are supplied to the first angle calculating means (28) and which are formed from the masses of the two compensating weights and the radii at which said compensating weights (3, 1) are guided around the axis of rotation of the grinding wheel, and
- the other output of the 180°-circuit (32) is connected to an input of an angle subtracting means (31) which receives from a second angle calculating means (29) connected to the subtracting means (27) an angle signal (angle $\beta$) corresponding to the cosine value formed, wherein said angle signal is calculated from a scalar value (S2) which is supplied to the second angle calculating means (29) and which is formed from the mass of the other of the two remaining compensating weights and the radius at which said compensating weight (2) is guided around the axis of rotation of the grinding wheel.

## Revendications

1. Procédé pour compenser le balourd d'une meule (4), selon lequel, après une opération de mesure du balourd, pour compenser le balourd mesuré de la meule, on fixe deux ou trois poids d'équilibrage (1,2;3) sur la meule (4), sur un ou plusieurs rayons autour de l'axe de la meule, dans des positions d'équilibrage calculées à partir du balourd à compenser,
caractérisé par le fait
que lors de l'opération de mesure du balourd, les poids d'équilibrage sont fixés sur la meule (4) dans des positions mémorisées par un dispositif d'évaluation (35;36), et que pour la compensation du balourd, lors de la détermination du nouveau positionnement des poids d'équilibrage (1,2;3), les influences des forces produites par les poids d'équilibrage sont compensées par le dispositif d'évaluation (35; 36).

2. Procédé suivant la revendication 1, caractérisé par le fait que les vecteurs de balourd, qui sont compensés par les vecteurs de force obtenus à partir des positions mémorisées et des masses respectives d'équilibrage (1,2;3), qui subsistent sur la meule (4), sont additionnés vectoriellement pour fournir le vecteur de balourd mesuré et que le vecteur de balourd de la meule, qui est obtenu lors de l'addition, est compensé par le nouveau positionnement des poids d'équilibrage (1,2;3) sur la meule (4).

3. Procédé suivant la revendication 1 ou 2, caractérisé par le fait que dans le cas de l'utilisation de deux poids d'équilibrage (1,2), on dispose les poids d'équilibrage respectifs sous des angles ($\alpha$ et $\beta$) par rapport à la position angulaire, décalée de 180°, du vecteur de balourd de la meule, angles qui, dans le cas de poids d'équilibrage identiques, satisfont aux relations suivantes

$$\cos\alpha \; = \; \frac{Us}{2 \times S1}$$

et

$$\cos\beta \; = \; \frac{Us}{2 \times S2}$$

et qui, dans le cas de poids d'équilibrage différents, satisfont aux relations suivantes :

$$\cos\beta \; = \; \frac{U_s^2 + S_1^2 - S_2^2}{2.U_s \, . \, S_1}$$

$$\sin\alpha \; = \; \frac{S_1}{S_2} \, . \, \sin\beta \, ,$$

Us représentant la valeur absolue du vecteur de balourd de la meule, S1 la grandeur scalaire obtenue à partir de la masse d'un poids d'équilibrage (1) et du rayon, avec lequel ce poids est déplacé autour de l'axe de rotation de la meule (4), et S2 la grandeur scalaire obtenue à partir de la masse de l'autre poids d'équilibrage (2) et du rayon, avec lequel ce poids d'équilibrage est déplacé autour de l'axe de rotation de la meule (4).

4. Procédé suivant la revendication 1 ou 2, caractérisé par le fait que, dans le cas de l'utilisation de trois poids d'équilibrage (1,2,3), on dispose l'un des trois poids d'équilibrage dans une position angulaire décalée de 180° par rapport à la position angulaire du vecteur de balourd de la meule, et on dispose les deux autres poids d'équilibrage respectifs dans des positions angulaires ($\alpha$ et $\beta$), dans la position angulaire, décalée de 180°, du vecteur de balourd de la meule et qui, dans le cas de poids d'équilibrage identiques, satisfont aux relations suivantes :

$$\cos\alpha = \frac{Us - S3}{2 \times S1}$$

et

$$\cos\beta = \frac{Us - S3}{2 \times S2}$$

et qui, dans le cas de poids d'équilibrage différents, satisfont aux relations suivantes :

$$\cos\beta = \frac{(U_s + S_2)^2 + S_1^2 - S_3^2}{2.(U_s . S_2)^2 . S_1}$$

et

$$\sin\alpha = \frac{S_1}{S_3} . \sin\beta ,$$

Us représentant la valeur absolue du vecteur de balourd de la meule et S1, S2, S3 les grandeurs scalaires obtenues à partir des masses respectives des trois points d'équilibrage (1,2,3) et des rayons respectifs, avec lesquels les poids d'équilibrage sont déplacés autour de l'axe de rotation de la meule.

5. Procédé suivant l'une des revendications 1 à 4, caractérisé par le fait qu'on utilise des poids d'équilibrage qui peuvent être déplacés avec des rayons variables autour de l'axe de rotation de la meule (4).

6. Procédé suivant l'une des revendications 1 à 4, caractérisé par le fait qu'on utilise des poids d'équilibrage, qui peuvent être déplacés avec des rayons constants autour de l'axe de rotation de la meule.

7. Procédé suivant l'une des revendications 1 à 4, caractérisé par le fait qu'on utilise des poids d'équilibrage (1,2;3), qui peuvent être déplacés avec un rayon commun autour de l'axe de rotation de la meule (4).

8. Procédé suivant l'une des revendications 1 à 7, caractérisé par le fait qu'on utilise des poids d'équilibrage de même masse.

9. Dispositif pour compenser le balourd d'une meule (4), comportant un dispositif (6) d'enregistrement des valeurs de mesure et un appareil de mesure du balourd (7), raccordé à ce dispositif, ainsi qu'un dispositif d'évaluation (35), dans lequel le positionnement de deux poids d'équilibrage (1,2) pouvant être amenés et fixés sur la meule (4), est déterminé en fonction du balourd mesuré, pour la mise en oeuvre du procédé suivant l'une des revendications 1 à 3, caractérisé par le fait que
   - aux deux poids d'équilibrage (1,2) sont associées des mémoires vectorielles respectives (10,11), dans lesquelles est mémorisé, en fonction de la masse et du positionnement du poids d'équilibrage respectif (1,2) sur la meule (4), un vecteur de balourd compensé de ce fait;
   - à la mémoire vectorielle (10,11) est raccordé un additionneur vectoriel (8), qui est raccordé à la sortie de l'appareil (7) de mesure du balourd;
   - à l'additionneur vectoriel (8) est raccordé un circuit de rotation sur 180° (32), qui fait pivoter de 180° la direction $\gamma$ du vecteur formé par l'additionneur vectoriel (8), et délivre un signal angulaire ($\gamma + 180°$) correspondant;
   - une sortie du circuit de rotation sur 180° (32) est raccordée à une entrée d'un additionneur angulaire (30), qui reçoit, de la part d'un premier calculateur d'angles (28), un signal correspondant à un angle ($\alpha$), le premier calculateur d'angles (28) calculant l'angle ($\alpha$) à partir de la valeur absolue du signal de sortie délivré par l'additionneur vectoriel (8), ainsi que d'une grandeur scalaire (S1), qui est formée à partir de la masse de l'un des poids d'équilibrage (1) et du rayon, avec lequel ce poids d'équilibrage (1) est guidé sur la meule (4) autour de l'axe de rotation de la meule; et

12

- l'autre sortie du circuit de rotation de 180° (32) est raccordée à un soustracteur d'angles (31), qui reçoit, de la part d'un second calculateur d'angles (29), un signal qui correspond à un angle ($\beta$), le second calculateur d'angles (29) calculant l'angle ($\beta$) à partir de la valeur absolue du signal de sortie délivré par l'additionneur vectoriel (8), ainsi que d'une grandeur scalaire (S2), qui est formée à partir de la masse de l'autre poids d'équilibrage (2) et du rayon, avec lequel cet autre poids d'équilibrage (2) est guidé sur la meule (4) autour de l'axe de rotation de la meule.

10. Dispositif pour compenser le balourd d'une meule (4) montée dans une machine de meulage, comportant un dispositif (6) d'enregistrement de valeurs de mesure et un appareil (7) de mesure du balourd, raccordé à ce dispositif, ainsi qu'un dispositif d'évaluation (36), dans lequel le positionnement de trois poids d'équilibrage (1,2,3), qui peuvent être déplacés et fixés sur la meule (4), est déterminé en fonction du balourd mesuré, pour la mise en oeuvre du procédé suivant l'une des revendications 1, 2 et 4, caractérisé par le fait que

   - aux trois poids d'équilibrage (1,2,3) sont associés des mémoires vectorielles respectives (10,11,12), dans lesquelles est mémorisé, en fonction de la masse et du positionnement du poids d'équilibrage respectif (1,2,3) sur la meule (4), un vecteur de balourd compensé de ce fait;
   - à la mémoire vectorielle (10,11,12) est raccordé un additionneur vectoriel (9), qui est raccordé à la sortie de l'appareil (7) de mesure du balourd;
   - à l'additionneur vectoriel (9) est raccordé un circuit de, rotation sur 180° (32), qui fait pivoter de 180° la direction $\gamma$ du vecteur formé par l'additionneur vectoriel (9), et délivre un signal angulaire ($\gamma$ + 180°) correspondant;
   - cette position angulaire ($\gamma$ + 180°) est déterminée par le positionnement de l'un des trois poids d'équilibrage (1,2,3);
   - à la sortie de l'additionneur vectoriel (9) est raccordé un calculateur de valeurs absolues (26), qui forme la grandeur scalaire du vecteur délivré par l'additionneur vectoriel (9);
   - au calculateur de valeurs absolues (26) est raccordé un soustracteur (27), qui calcule la différence entre la grandeur scalaire du vecteur délivrée par l'additionneur vectoriel (9) et la grandeur scalaire (S2), qui est formée à partir de la masse du poids d'équilibrage (3), qui doit être associé à la position angulaire ($\gamma$ + 180°), et du rayon, avec lequel le poids d'équilibrage (2) est guidé sur la meule (4), autour de l'axe de rotation de cette dernière
   - la première sortie du circuit de rotation sur 180° (32) est raccordée à une entrée d'un additionneur angulaire (30) qui reçoit un signal correspondant à la valeur de cosinus formée de la part d'un premier calculateur d'angles (28), qui est raccordé au soustracteur (27), ce signal d'angle étant calculé à partir des grandeurs scalaires (53, S1) envoyées par le premier calculateur d'angles (28) et qui sont formées à partir des masses des deux poids d'équilibrage et des rayons, avec lesquels ces poids d'équilibrage (3,1) sont guidés autour de l'axe de rotation de la meule; et
   - l'autre sortie du circuit de rotation à 180° (32) est raccordée à une entrée d'un soustracteur d'angles (31), qui reçoit un signal d'angle (angle $\beta$) correspondant à la valeur de cosinus formée, de la part d'un second calculateur d'angles (29) raccordé au soustracteur (27), ce signal d'angle étant calculé à partir d'une grandeur scalaire (S2), qui est envoyée au second calculateur d'angles (29) et qui est formée à partir de la masse de l'autre des deux poids d'équilibrage restant et du rayon, avec lequel ce poids d'équilibrage (2) est déplacé autour de l'axe de la meule.

# FIG. 1

FIG. 2

EP 0 417 414 B1

FIG. 3

(A)

(B)

FIG. 4

(A)

(B)